# EUROPÄISCHE PATENTANMELDUNG

(11) **EP 4 060 441 A1**
(43) Veröffentlichungstag der Anmeldung: **21.09.2022**
(21) Anmeldenummer: 21163759.0
(22) Anmeldetag: 19.03.2021
(51) Int. Cl.: G05B 23/02, G06N 3/08

(54) **VERFAHREN UND SYSTEM ZUR ERKENNUNG VON ANOMALIEN IM BETRIEB EINER TECHNISCHEN ANLAGE**

(71) Anmelder: Siemens Aktiengesellschaft, 80333 München (DE)
(72) Erfinder: Bierweiler, Thomas, 76131 Karlsruhe (DE); Labisch, Daniel, 76149 Karlsruhe (DE)

(57) **Zusammenfassung**

Die Erfindung betrifft ein Verfahren und entsprechend ausgebildetes System, bei dem in der Lernphase pro Prozessschritt oder Batch-Prozess, bestehend aus mehreren Prozessschritten, eine eigene selbstorganisierende Karte (SOM) unter Verwendung historischer Datensätze, die einen fehlerfreien Betrieb der Anlage kennzeichnen, trainiert wird. Für diese Karte werden im Anschluss für jedes Neuron die Symptom-Schwellwerte und deren Toleranzen ermittelt und abgespeichert. Im nächsten Schritt der Lernphase werden pro Prozessschritt oder Batch für alle Zeitstempel alle zulässigen, zeitlichen Verläufe der Siegerneuronen unter Beachtung der Neuronen-Ähnlichkeit ermittelt und abgespeichert. In der Auswertungsphase werden im Gegensatz zur Lernphase mit aktuellen, zu überwachenden Datensätzen die zeitlichen Verläufe der Siegerneuronen ermittelt, d.h. es wird für jeden Zeitstempel das Siegerneuron ermittelt und anschließend überprüft, ob es sich auf einem der in der Lernphase ermittelten, zulässigen Siegerneuronenverläufe befindet. Dabei wird die Neuronen-Ähnlichkeit ebenso berücksichtigt. Erfindungsgemäß wird zusätzlich noch der wahrscheinlichste Siegerneuronenverlauf bestimmt, indem die Symptome aller vergangenen Zeitstempel dieses Prozessschritts oder dieses Batch-Prozesses ermittelt werden. Wenn für einen Datensatz mit einem Zeitstempel keine Zugehörigkeit des Siegerneurons zu einem Siegerneuronenverlauf ermittelt wird, wird ein Symptomvektor für diesen Zeitstempel unter Beachtung der Symptom-Schwellwerte unter Nutzung des wahrscheinlichsten Referenzpfades bestimmt und mindestens die Prozessvariablen, welche eine Anomalie aufweisen, ausgegeben. Auf diese Weise kann die Anomalie-Erkennung insbesondere bei Batch-Prozessen deutlich verbessert werden.

## Beschreibung

Die Erfindung betrifft ein Verfahren und ein entsprechendes System zur Erkennung von Anomalien im Betrieb einer technischen Anlage mit dem dazugehörigen Computerprogramm und Computerprogrammprodukt, wobei die Erkennung der Prozessanomalien mit Hilfe von sogenannten "selbst-organisierenden Karten" erfolgt.

In fertigungstechnischen und prozesstechnischen Anlagen werden technische Abläufe mittels eines Automatisierungssystems gesteuert. Der Ablauf der einzelnen Produktionsschritte oder des verfahrenstechnischen Prozesses kann sowohl produktionsbedingten Schwankungen als auch durch Fehler innerhalb der technischen Anlage bedingten Schwankungen unterliegen. Für einen sicheren Betrieb und zur Erfüllung der qualitativen Ziele ist daher eine umfassende Überwachung der Abläufe notwendig. Dabei müssen ungewöhnliche, fehlerbedingte Abweichungen von normalen Produktions- oder Prozessschwankungen unterschieden werden. Solche ungewöhnliche, fehlerbedingte Abweichungen werden als Anomalie bezeichnet.

Das Vorliegen einer Anomalie ist prinzipiell eine binäre Aussage, die jedoch häufig mit mindestens einem weiteren Wert kombiniert wird, wie beispielsweise einem Wert, der die Stärke der Abweichung vom Normal quantifiziert.

Liegt eine Anomalie vor, reicht das skalare Wissen darüber jedoch nicht aus, um diese zu verstehen und nächste Schritte zu planen. Wichtig ist die Bereitstellung eines Symptoms. Symptome sind Indikatoren oder Anzeichen für eine Abweichung vom Normalzustand. In der VDI/VDE-Richtlinie 2651, Blatt 1, "Plant Asset Management (PAM) in der Prozessindustrie" vom Mai 2017 ist auf Seite 19 der Begriff eines Symptoms erklärt: Symptome werden demgemäß aus Merkmalen (= charakteristische Größen wie bspw. Druck, Temperatur oder Füllstand) durch Vergleich mit Bezugsgrößen abgeleitet. So ist z. B. das Merkmal "Wicklungstemperatur eines Motors" alleine noch kein Symptom, weil der Absolutwert nichts über eine mögliche Überlastung aussagt. Erst der Vergleich mit dem maximal zulässigen Wert oder einem Bezugswert (z. B. Nennwert) liefert eine Aussage zu einer Abweichung. Symptome können daher z.B. durch Vergleich mit Soll-, Grenz-, Nenn- oder Erfahrungswerten, durch Trendüberwachung oder Vergleich mit Modellen abgeleitet werden. Eine nachfolgende Diagnose oder Ursachenermittlung wertet die Symptome als Ergebnisse der Prozessüberwachung aus. Es werden die Einflüsse oder Prozessvariablen ermittelt, die das Symptom auslösen.

In der Prozessautomatisierung werden grundsätzlich zwei Prozessvarianten unterschieden: der kontinuierliche Prozess und der diskontinuierliche Prozess.

Der kontinuierliche Prozess läuft ohne Unterbrechungen ab. Es ist ein Fließprozess, das heißt es gibt einen ständigen Zu- oder Abfluss von Material, Energie oder Information. Kontinuierliche Prozesse werden bei der Verarbeitung großer Mengen mit wenigen Produktwechseln bevorzugt. Ein Beispiel wäre ein Kraftwerk, welches Strom produziert, oder eine Raffinerie, die aus Rohöl Kraftstoffe gewinnt

Diskontinuierliche Prozesse sind alle Batch-Prozesse, die in chargenorientierter Fahrweise nach ISA-88 zum Beispiel mithilfe von Ablaufsteuerungen (englisch: sequential functional control, abgekürzt SFC) oder auch Schrittketten betrieben werden. Bei Batch-Prozessen erfolgt der Einsatz von Material oder Stoffen zu unterschiedlichen Zeitpunkten, und zwar portionsweise und nicht linear im jeweiligen Teilprozess. Diese Batch-Prozesse bestehen üblicherweise aus Phasen. In der chemischen Industrie bedeutet das beispielsweise, dass das Produkt durch einen oder mehrere Reaktoren läuft und dort so lange verbleibt, bis die Reaktion abgelaufen ist und der nächste Produktionsschritt oder Prozessschritt vollzogen werden kann. Batch-Prozesse laufen daher grundsätzlich schrittweise mit mindestens einem Prozessschritt ab. Im Folgenden wird der Begriff Batch als Abkürzung für einen Batch-Prozess mit mehreren Prozessschritten verwendet.

Zur Erkennung von Prozessanomalien in technischen Anlagen und zur Ermittlung der Symptome, welche auf die Ursachen der Anomalien hinweisen, sind eine Vielzahl von modellbasierten und datenbasierten Ansätzen bekannt.

Aus der EP 3 282 399 B1 sind ein Verfahren zur verbesserten Erkennung von Prozessanomalien einer technischen Anlage sowie ein entsprechendes Diagnosesystem bekannt. Die Erkennung der Prozessanomalien erfolgt hier rein datenbasiert mittels so genannter "selbst-organisierender Karten" (engl. "selforganizing maps", abgekürzt SOMs).

Eine SOM ist eine Art künstliches neuronales Netzwerk, das durch einen nicht überwachten Lernprozess eingelernt wird, um eine zweidimensionale, diskretisierte Darstellung des Eingaberaums der eingelernten Daten, die als Karte bezeichnet wird, zu erstellen. Diese Karten sind nützlich für die Klassifizierung und Visualisierung niederdimensionaler Ansichten von hochdimensionalen Daten, wie sie in der Prozessindustrie vorliegen. Die Karte besteht aus Neuronen oder Knoten in einer bestimmten Topologie (z.B. 6 x 8 Neuronen in Matrizenform angeordnet). Jedes Neuron entspricht einem Vektor oder n-Tupel der Dimension n x 1, wobei die Dimension des Vektors z.B. der Anzahl n der Eingangssignale entspricht. Dabei kann es sich beispielsweise um Prozessvariablen wie Temperatur, Druck, Luftfeuchtigkeit etc. handeln sowie um Stellgrößen, Sollwerte oder messbare Störgrößen, d.h. alle Größen, die in direktem Zusammenhang mit dem verfahrenstechnischen Prozess stehen und somit einen Datensatz bilden, der einen Prozesszustand charakterisiert.

In einer Lernphase werden für jeden Knoten der selbstorganisierenden Karte in einem Datenspeicher mehrere, einen fehlerfreien Betrieb der Anlage kennzeichnende Datensätze abgespeichert und anhand dieser Datensätze durch das Lernverfahren die n-Tupel oder Neuronen mit den Werten der Prozessvariablen für fehlerfreien Betrieb für die Knoten oder die Neuronen der Karte berechnet und an diesen abgelegt, das heißt den Neuronen zugeordnet. Alle Knoten der Karten repräsentieren nach dem Lernvorgang einen typischen Zustand der Lerndaten, wobei im Allgemeinen keiner der Knoten genau einem tatsächlichen Zustand entspricht. Die Werte der n-Tupel der Neuronen sind nach der Lernphase bestimmt. Die Größe der Karte, also die zweidimensionale Anordnung der Neuronen, kann im Vorfeld festgelegt werden oder während der Lernphase optimiert und angepasst werden.

Auch in der EP 3 282 399 B1 wird in der Lernphase die selbstorganisierende Karte unter Verwendung der historischen Prozessdaten als Gutzustände der Anlage trainiert und es werden Schwellwerte für die euklidischen Abstände der Gutzustände zu den betreffenden Neuronen der selbst-organisierenden Karte festgelegt.

Das Neuron mit dem geringsten Abstand zu den präsentierten Lernvektoren wird als Siegerneuron (häufig auch Referenzknoten genannt) bezeichnet. Im stationären Betrieb repräsentiert im Idealfall ein Siegerneuron einen korrekten stationären Gutzustand. Da stationäre Zustände allerdings auch Schwankungen unterliegen, die durch mehrere Neuronen abgebildet werden, können auch im stationären Zustand mehrere Neuronen einer SOM zur Abbildung des Zustands genutzt werden. Für dynamische Prozesse, in denen das zeitliche Verhalten der Prozessdaten überwacht werden soll, werden in der Lernphase die zeitlichen Reihenfolgen der Siegerneuronen (häufig auch Referenzpfade genannt) ermittelt und abgespeichert.

Auch in der EP 3 282 399 B1 werden die Gut-Zustände dazu genutzt, die zeitlichen Reihenfolgen der Siegerneuronen zu ermitteln und zu speichern.

Die Auswertung eines aktuellen Datensatzes mit einer eingelernten Karte erfolgt über die Berechnung eines Abstandsmaßes der betrachteten Datensätze zu jedem Neuron der Karte. Zur Symptomgenerierung mit selbstorganisierenden Karten wird üblicherweise der Datensatz des aktuellen Zustands mit dem Datensatz des Neurons mit dem geringsten Abstand, dem Siegerneuron, verglichen. In der EP 3 282 399 B1 wird diese Vorgehensweise für zeitlich abhängige Datensätze auf die Referenzpfade (= Siegerneuronenverläufe) übertragen und in der Auswertungsphase wird der aktuelle Pfad durch Vergleich mit den in der Lernphase ermittelten und abgespeicherten Referenzpfaden (oder Referenzpfadbereichen) überprüft und ein Symptomvektor wird ermittelt, der ggfs. eine Prozessanomalie anzeigt. In der EP 3 282 399 B1 wird ferner eine Anomalie angezeigt, wenn die Dauer eines aktuellen Gutzustands von der Dauer eines eingelernten Gutzustands abweicht.

Eine Erkennung von Abweichungen im zeitlichen Verhalten der Datensätze einer Anlage durch Bewertung des Abstandsmaßes allein ist jedoch häufig nicht ausreichend, um Anomalien korrekt zu erkennen. Dies ist insbesondere der Fall, wenn Situationen auftreten, in denen Zustände mit Abweichungen von ihrem Normalzustand anderen Anlagenzuständen ähnlich sind. Denn gerade bei dynamischen Vorgängen, bei denen viele verschiedenen Anlagenzustände in Abhängigkeit von der Zeit in der SOM abgebildet sind, sind jedoch nicht alle diese Gutzustände zu jedem Zeitpunkt als gut einzustufen. Ferner ist es wichtig, möglichst frühzeitig solche Situationen zu erkennen. Daher ist es notwendig, bei der Pfadverfolgung, also dem Vergleich des aktuellen Pfades mit den Referenzpfaden, Kriterien zu entwickeln, die anzeigen, dass man den "richtigen" oder zulässigen Referenzpfad gewählt hat und dass man innerhalb eines Prozessschritts oder Batch möglichst frühzeitig, also zu einem frühen (Abtast-)Zeitpunkt innerhalb eines Prozessschritts oder Batch den richtigen Referenzpfad auswählt. Damit einher geht die korrekte Ermittlung des Symptomvektors im Fehlerfall. Eine zuverlässige Ursachenfindung ist nur möglich, wenn die Symptome korrekt ermittelt werden.

Es ist daher die Aufgabe der vorliegenden Erfindung für dynamische Prozesse das Verfahren und System zur Erkennung von Anomalien im Betrieb einer technischen Anlage, wie es in der EP 3 282 399 B1 beschrieben und beansprucht ist, weiterzubilden, sodass es noch zuverlässiger und frühzeitiger Abweichungen vom Normalbetrieb, insbesondere bei dynamischen, diskontinuierlichen Prozessen, erkennt. Davon ausgehend liegt der Erfindung die Aufgabe zugrunde, ein geeignetes Computerprogramm und eine graphische Benutzeroberfläche anzugeben.

Diese Aufgabe wird durch die Merkmale des unabhängigen Patentanspruchs 1 gelöst. Außerdem wird die Aufgabe gelöst durch ein Computerprogramm nach Anspruch 15, ein Computerprogrammprodukt nach Anspruch 16 und eine graphische Benutzeroberfläche nach Anspruch 17.

Ausgestaltungen der Erfindung, die einzeln oder in Kombination miteinander einsetzbar sind, sind Gegenstand der Unteransprüche.

Die Erfindung schlägt für dynamische Prozesse, die mindestens einen Prozessschritt aufweisen, ein verbessertes Verfahren und System zur Erkennung von Anomalien im Betrieb einer technischen Anlage vor und eignet sich daher insbesondere für Batch-Prozesse. Dazu werden erfindungsgemäß sowohl die Lernphase als auch die Auswertungsphase gegenüber dem bekannten Stand der Technik weitergebildet.

In der Lernphase wird pro Prozessschritt oder Batch eine eigene selbstorganisierende Karte (SOM) unter Verwendung historischer Datensätze, die einen fehlerfreien Betrieb der Anlage kennzeichnen, trainiert. Für diese Karte werden im Anschluss für jedes Neuron die Symptom-Schwellwerte und deren Toleranzen ermittelt und abgespeichert.

Bei einem Symptom-Schwellwert handelt es sich um die Differenz aus einem Gut-Datensatz (oder Test-Vektor) der Trainings-Daten und dem Datensatz, der das betrachtete Neuron kennzeichnet. Der Symptom-Schwellwert wird durch einen Vektor der Dimension des Neurons ausgedrückt. Beispielsweise kann der Schwellwert je Signal 0,15+0,03 Toleranz betragen. Der Symptom-Schwellwert oder der Schwellwert zur Bestimmung eines Symptoms gibt demnach an, wie groß zu einem Zeitstempel die Differenz zwischen einem Gut-Datensatz und dem Datensatz, der das betrachtete Neuron kennzeichnet, sein darf. Ist der Schwellwert verhältnismäßig klein gewählt, so sind die betrachteten Datensätze sehr ähnlich zu den Gut-Daten, also dem im Knoten der SOM hinterlegten Datensatz für den Normalbetrieb. Die Symptombestimmung ist dann ggfs. nicht aussagekräftig, weil zu geringe Abweichungen vom Normalbetrieb detektiert werden. Ist der Schwellwert zu groß gewählt, werden bei der Symptombildung ggf. zu viele Abweichungen von Prozessvariablen berücksichtigt, sodass die Anomalie-Erkennung verfälscht wird.

In der Lernphase werden somit die Schwellwerte für die Abstandsmaße (hier zumeist euklidische Abstände) der Gutzustände zu den betreffenden Neuronen der SOM ermittelt. Das mathematische Abstandsmaß ist hierbei beliebig wählbar. So können beispielsweise auch kartesische Abstände oder eine Manhattan Distanz verwendet werden. Demnach besitzt jedes Neuron der SOM einen eigenen Schwellwert. Diese Schwellwerte können optional noch durch einen Toleranzwert beaufschlagt werden, um eine besonders gute zuverlässige Abbildung des Gutzustands zu erreichen. Der Schwellwert ist entscheidend für die Klassifizierung eines Zustands, für die Einordnung, ob ein Zustand als "gut" oder "schlecht" angesehen werden kann. Pro Neuron einer SOM wird nach der Lernphase ein Schwellwert gespeichert. Optional kann auch ein zugehöriger Toleranzwert gespeichert werden.

Im nächsten Schritt der Lernphase werden pro Prozessschritt oder Batch für alle Zeitstempel alle zulässigen, zeitlichen Verläufe der Siegerneuronen unter Beachtung der Neuronen-Ähnlichkeit ermittelt und abgespeichert.

Dies bedeutet, dass für jeden Zeitpunkt eines Prozessschritts oder Batch für einen Testvektor oder Gut-Datensatz der Abstand zu jedem Neuron der Karte bestimmt wird. Das Neuron, zu dem der Abstand des Gut-Datensatzes minimal ist, ist das Siegerneuron. Wird dieses minimale Abstandsmaß Zeitstempel für Zeitstempel ermittelt, so entsteht eine zeitliche Abfolge der Siegerneuronen, der so genannte Siegerneuronenverlauf oder auch Referenzpfad. Allerdings muss für diese Verläufe erfindungsgemäß auch die Bedingung der Neuronen-Ähnlichkeit erfüllt sein. Es handelt sich dabei um alle Neuronen, für die der Abstand eines Datenvektors (hier Gut-Datensatz) zum Siegerneuron innerhalb der Symptom-Toleranz dieses Neurons liegen. Die Neuronen entsprechen ähnlichen Prozesszuständen. Damit können sich pro Zeitstempel mehrere zulässige Siegerneuronen ergeben und somit unter Berücksichtigung der Zeitabhängigkeit in Summe eine Vielzahl von Siegerneuronenverläufen. Diese Siegerneuronenverläufe werden pro SOM und damit für jeden Prozessschritt oder Batch separat bestimmt und gespeichert.

In der Auswertungsphase werden im Gegensatz zur Lernphase mit aktuellen, zu überwachenden Datensätzen die zeitlichen Verläufe der Siegerneuronen ermittelt, d.h. es wird für jeden Zeitstempel das Siegerneuron ermittelt und anschließend überprüft, ob es sich auf einem der in der Lernphase ermittelten, zulässigen Siegerneuronenverläufe befindet. Dabei wird die Neuronen-Ähnlichkeit ebenso berücksichtigt, d.h. es wird überprüft, ob der Abstand eines Datenvektors zum Siegerneuron innerhalb des Symptom-Schwellwerts aller Neuronen aus den gespeicherten Verläufen zum aktuellen Zeitpunkt liegt. Damit werden pro Zeitstempel nur die Siegerneuronen aus den zulässigen Verläufen berücksichtigt. Um ferner noch zu verifizieren, ob sich die pro Zeitstempel ermittelten Siegerneuronen sozusagen auf dem "richtigen" Verlauf oder Pfad befinden, wird erfindungsgemäß noch der wahrscheinlichste Siegerneuronenverlauf oder Referenzpfad bestimmt, indem die Symptome aller vergangenen Zeitstempel dieses Prozessschritts oder Batch ermittelt werden. An dieser Stelle hebt sich das erfindungsgemäße Verfahren deutlich gegen den Stand der Technik ab, wo Zeitstempel für Zeitstempel nur ein Vergleich zwischen dem aktuell ermittelten Siegerneuron und den Siegerneuronen aus der Lernphase durchgeführt wurde. Es wurde zwar berücksichtigt, dass es mehrere unterschiedliche Siegerneuronenverläufe geben kann, allerdings wurde nicht bestimmt, welcher dieser Verläufe der Realität am nächsten kommt. Auch Batch-Prozesse wurden nicht berücksichtigt.

Weicht nun ein aktueller Datensatz zum aktuellen Zeitpunkt von den möglichen Siegerneuronenverläufen ab, so weicht der aktuelle Datensatz von den Lerndaten ab. Für diesen Zeitstempel wird demnach keine Zugehörigkeit des Siegerneurons zu einem Referenzpfad ermittelt, was ein Hinweis auf eine beginnende Abweichung vom Normalzustand darstellt. Daher wird nun der Symptomvektor (= Differenz des Datenvektors und des Vektors des zu vergleichenden Neurons) unter Beachtung der Symptom-Schwellwerte und unter Nutzung des wahrscheinlichsten Referenzpfades ermittelt. Der Symptomvektor wird anhand des Vergleichs mit dem Neuron des wahrscheinlichsten Referenzpfades ermittelt und die Prozessvariablen, die eine Anomalie aufweisen, werden ausgegeben. Allgemein gilt, dass das für den aktuellen Zeitstempel relevante Symptom bestimmt wird, indem Differenzen aus den Datensätzen des aktuellen Zeitstempels zu dem zuvor bestimmten zu vergleichenden Neuron gebildet werden, wobei nur die Differenzen von Prozessvariablen berücksichtigt werden, die einen vorgegebenen Schwellwert überschreiten.

Das erfindungsgemäße Verfahren und System erlauben somit eine umfassende Anlagenüberwachung in der Prozessindustrie und eine frühzeitige Ermittlung von Fehlzuständen oder unbekannter Prozessbedingungen bei dynamischen Prozessen, insbesondere bei Batch-Prozessen. Das erfindungsgemäße Verfahren eignet sich insbesondere für komplexe Prozessanlagen, wie sie in der chemischen und pharmazeutischen Industrie vorkommen. Erst durch das Bestimmen und Speichern der Siegerneuronenverläufe für die Gut-Daten unter Berücksichtigung der Symptom-Schwellwerte und -Toleranzen zusammen mit der Neuronen-Ähnlichkeit entstehen plausible Verläufe. Symptome können gegenüber dem Stand der Technik besser bestimmt werden, da nun pro Zeitstempel passende Neuronen ausgewählt werden, die für die Symptomgenerierung überhaupt in Frage kommen. Existieren mehrere mögliche Siegerneuronenverläufe, so kann mittels der Symptome aller vergangenen Zeitschritte dieses Prozessschrittes oder Batch-Prozesses der wahrscheinlichste bestimmt werden. Die anderen Siegerneuronenverläufe werden entweder nicht betrachtet oder sie werden für eine Angabe zur Unsicherheit des Symptoms oder auch für alternative Symptome genutzt. Nur auf diese Weise kann ein Symptomvektor korrekt ermittelt werden. Fehlzustände und ungeplante Shutdowns von Anlagen können vermieden werden.

Im Rahmen einer weiteren bevorzugten Weiterbildung des erfindungsgemäßen Verfahrens und Systems werden anstelle der Symptom-Schwellwerte oder zusätzlich zu den Symptom-Schwellwerten Quantisierungsfehler mittels der Trainingsdaten ermittelt und bei der Auswertung für die Ermittlung des wahrscheinlichsten Siegerneuronenverlaufs verwendet.

Der Quantisierungsfehler ist ein Abstandsmaß zum jeweiligen Neuron und wird als Betrag aus der Differenz zwischen dem Siegerneuron und dem betrachteten Datensatz berechnet. Zur Erklärung: Betrachtet wird nun ein aktueller Prozesszustandsvektor eines laufenden Betriebs. Dieser wird nun mit allen Neuronen der SOM verglichen, d.h. der euklidische Abstand des Prozesszustandsvektors zu allen Neuronen wird bestimmt. Für das Neuron mit dem kleinsten euklidischen Abstand wird anschließend geschaut, ob der Abstandswert unterhalb des Schwellwerts für dieses Neuron liegt. Dieser Abstand wird auch als Quantisierungsfehler bezeichnet. Dieser ist genau so groß, dass alle Gut-Daten gerade noch als gut klassifiziert werden. Bei der Betrachtung der Quantisierungsfehler, die sich mit den Gut-Datensätzen ergeben, ist es ebenso möglich, diese Werte zur Ermittlung von Schwellwerten für die Neuronen einer Karte zu benutzen. Auch Toleranzen können hierbei mit aufgeschlagen werden. Quantisierungsfehler und der Betrag der Symptom-Schwellwerte sind somit Skalare, welche den Abstand eines Datenvektors (oder Datensatzes) zu einem Datensatz eines zu vergleichenden Neurons kennzeichnen.

Der Quantisierungsfehler hat somit auch Auswirkungen auf die Neuronen-Ähnlichkeit. Zur Neuronen-Ähnlichkeit eines Siegerneurons gehören damit alle Neuronen, deren Quantisierungsfehler innerhalb der Quantisierungsfehlertoleranz des Siegerneurons liegen. Wird die Neuronen-Ähnlichkeit über den Quantisierungsfehler definiert, so können Neuronen, die sich insgesamt ähnlich sind, jedoch bei einzelnen Vektoreinträgen deutlich unterscheiden, unter die Neuronen-Ähnlichkeit fallen, also ähnliche Zustände abbilden.

Die Nutzung des Quantisierungsfehlers ist zwar weniger robust als die Auswertung über die einzelnen Symptome, erfordert jedoch weniger Rechenleistung und macht das erfindungsgemäße Verfahren somit vorteilhaft schneller.

In einer vorteilhaften Ausführungsvariante werden die Schwellwerte und/oder Quantisierungsfehler samt Toleranzen mittels der Trainingsdaten automatisch ermittelt. Dazu werden nach dem Einlernen der SOM für alle Trainingsdaten die Siegerneuronen ermittelt. Für jedes Neuron wird die maximale und die minimale Abweichung gespeichert. Zusätzlich können diese ermittelten Toleranzen erweitert werden, indem sie z.B. mit einem Faktor oder mit der Standardabweichung beaufschlagt werden.

In einer weiteren vorteilhaften Ausführungsvariante wird die Größe der SOM in der Lernphase optimiert. Dazu können in einem ersten Schritt eine Vielzahl von SOMs zufällig initialisiert werden, woraus die beste Karte, d.h. die Karte mit dem kleinsten Quantisierungsfehler, vorausgesetzt alle Neuronen werden getroffen, ausgesucht wird. Weitere Kriterien wie z.B. eine Mindestanzahl von Mehrfachtreffern der Trainingsdaten können genutzt werden. Es kann ferner auch ein iteratives Verfahren genutzt werden, bei dem mit einer bestimmten Kartengröße begonnen wird und anschließend anhand der Trainingsdaten die Anzahl der Treffer pro Neuron ermittelt wird. In Abhängigkeit davon wird die Kartengröße schrittweise angepasst und es wird wieder ermittelt, ob die Karte zu groß oder zu klein ist. Die Iteration wird so lange weitergeführt, bis die größte Karte, die gerade nicht zu groß ist, gefunden ist. Durch diese Vorgehensweise werden optimale Voraussetzungen für eine optimale Anlagen-Überwachung geschaffen. Eine nahezu optimale Kartengröße steigert die Effizienz des Verfahrens und verhindert unnötige Rechenzeiten (durch die Auswertung von ohnehin nicht getroffenen Neuronen).

In einer besonders vorteilhaften Ausführungsvariante werden in der Lernphase historische Datensätze bestimmt, welche das Sollverhalten des Betriebs der technischen Anlage als Arbeitspunkt abbilden, indem mindestens eine Prozessvariable des Datensatzes als Sollwert definiert wird und für jeden Wert dieser Variablen oder im Fall von mehreren Variablen für jede Wertekombination eine eigene SOM eingelernt wird. In dieser Ausführungsvariante werden pro Arbeitspunkt eigene SOMs trainiert und bei der darauffolgenden Auswertung berücksichtigt. Sollwerte beeinflussen das Prozessverhalten signifikant. Wenn für jeden Sollwert oder für Sollwertkombinationen eine eigene SOM eingelernt wird, muss nicht mehr eine Karte indirekt alle Variationen abdecken. Jede einzelne SOM bildet in dieser Ausführungsvariante vorteilhaft pro Arbeitspunkt das passende Anlagenverhalten ab. In manchen Prozessanlagen erfolgt eine Sollwertänderung kontinuierlich über einen längeren Zeitraum. Diese langsame Sollwertänderung wird auf diese Weise ebenso berücksichtigt, indem für ein Zeitintervall, in dem die langsame Sollwertänderung erfolgt, eine eigene SOM eingelernt wird. Die Ausführungsvariante, für einen Sollwert oder eine Sollwertkombination eine passende SOM einzulernen, führt zu kleineren Kartengrößen, wodurch die Effizienz des erfindungsgemäßen Verfahrens weiter erhöht wird.

In einer weiteren vorteilhaften Ausführungsvariante erfolgt bei einer Vielzahl von Sollwerten eine Clusterung der Sollwerte und es wird pro Cluster eine SOM eingelernt. Diese Ausführungsvariante ist besonders sinnvoll, wenn sehr viele Sollwerte zum Einsatz kommen. Dies kann passieren, wenn beispielsweise ein überlagertes System, wie ein Prozessleitsystem zu jedem Zeitpunkt neue Sollwerte generiert, die sich allerdings nicht stark unterscheiden. In diesem Fall werden ähnliche Sollwerte in einem Cluster zusammengefasst und für dieses Cluster, d.h. für alle Daten mit Sollwerten innerhalb des Clusters, eine SOM eingelernt. Dazu können beliebige Clustering-Verfahren wie z.B. das Nearest Neighbor-Verfahren zum Einsatz kommen. Beim Clustering sollte der Datenumfang in den Clustern berücksichtigt werden. Für die verschiedenen Sollwerte (bzw. verschiedenen Cluster) sollten ausreichend Gut-Daten zum Einlernen der jeweiligen SOM zur Verfügung stehen. Ist beispielsweise ein Sollwert nur sehr kurz aufgetreten, so würde eine SOM nur für diesen kurzen Zeitraum eingelernt und sie wäre daher zu sehr auf diesen Betriebszeitraum spezialisiert und für die Überwachungsaufgabe nicht einsetzbar.

In einer weiteren vorteilhaften Ausführungsvariante wird analysiert, wie stark sich die SOMs verschiedener Arbeitspunkte bzw. Cluster unterscheiden. Dazu werden die historischen Datensätze aus einem ersten Arbeitspunkt bzw. Cluster mit der SOM eines zweiten Arbeitspunktes bzw. Clusters ausgewertet und die Abweichungen zwischen den Datensätzen und den SOMs bestimmt und bei zu geringen Abweichungen werden die entsprechenden Arbeitspunkte bzw. Cluster zusammengefasst. Diese Vorgehensweise hat den Vorteil, dass ein ähnliches Prozessverhalten bei geringen Abweichungen zwischen den SOMs verschiedener Arbeitspunkte bzw. Cluster erkannt werden kann.

In einer anderen vorteilhaften Ausführungsvariante werden nach der Lernphase erhaltene Gut-Daten lediglich zur weiteren Verbesserung der Schwellwerte und der Bestimmung der Siegerneuronenverläufe genutzt. Auf diese Weise kann verhindert werden, dass der Einlernvorgang für den erweiterten Datensatz komplett neu durchgeführt werden muss. Der Vorteil liegt somit in einem deutlich reduzierten Berechnungsaufwand. Die Rechenzeit zum Einlernen wird verkürzt. Ferner bleiben bisherige Siegerneuronenverläufe erhalten.

In einer besonders vorteilhaften Ausführungsvariante kann beispielsweise ein Bediener selbst festlegen, welche Werte pro Prozessschritt oder Batch ausgewertet werden sollen und/oder welche Zeiträume als "Gut" klassifiziert werden sollen. Dies erlaubt eine höhere Flexibilität des Verfahrens. Der Bediener kann entweder konkret Werte und/oder Zeiträume festlegen, welche für die Anomalie-Erkennung verwendet werden sollen oder es lassen sich anhand von Qualitätsparametern (z.B. basierend auf Laborproben) Teile eines Prozessschritts (= Zeitraum), ganze Prozessschritte oder Batches bestehend aus mehreren Prozessschritten mit guter Qualität händisch durch einen Bediener oder auch automatisiert mittels einer Software ableiten. Da Laborproben teilweise erst zeitverzögert entnommen werden können und auch deren Analyse einige Zeit benötigt, ist es wichtig, die Aussage über die Klassifizierung einer Laborprobe immer im Zusammenhang mit einem bestimmten Zeitraum/Prozessschritt oder Batch zu beziehen. Dabei können sich die Zeiträume/Prozessschritte/Batches für gute und schlechte Laborproben durchaus unterscheiden. Auch ist festzulegen, welche Aussage höhere Priorität hat, falls für einen Zeitraum/Prozessschritt/Batch sowohl Gut- als auch Schlechtaussagen auftreten. Außerdem sollte festgelegt werden, ob Zeiträume/Prozessschritte/Batches ohne Laboraussage standardmäßig als gut oder als schlecht zu bewerten sind.

In einer weiteren vorteilhaften Ausführungsvariante können in der Auswertungsphase bei der Anomalie-Erkennung Zeit-Toleranzen hinsichtlich der Zeitstempel berücksichtigt werden und entweder fest hinterlegte Zeit-Toleranzen berücksichtigt werden oder diese eingestellt werden. Generell ist bei der Auswertung zu beachten, dass der Anfangs- und Endzeitpunkt der Analyse immer mit Anfangs- und Endzeitpunkten von Schritten übereinstimmen muss, um ein sinnvolles Ergebnis zu erhalten. Wird ein davon abweichender Zeitraum abgefragt und dargestellt, muss die Analyse daher entsprechend erweitert werden. Um kurzzeitige Falschalarme zu reduzieren, kann beispielsweise eine Art Filterung der einzelnen Abweichungen in zeitlicher Richtung erfolgen. Dazu wird über eine vorgegebene Zeitspanne (z.B. 10 Zeitstempel) bewertet, in wie vielen Zeitschritten (hier Zeitstempel) eine Anomalie erkannt wurde. Wird in der Mehrzahl der Zeitschritte (auch andere Verhältnisse sind selbstverständlich möglich) eine Anomalie erkannt, so werden alle 10 Zeitschritte als Anomalie gewertet. Die Zeit-Toleranz für die Anomalie-Erkennung würde hier 10 Zeitstempel betragen. Auch bei der Ermittlung von Symptomen kann beispielsweise eine Zeit-Toleranz von 10 Zeitstempeln geduldet werden. Bei der Visualisierung einer Anomalie oder Symptoms kann die Anomalie oder das Symptom solange unterdrückt werden, bis die eingestellte oder vorgegebene Zeit-Toleranz abgeschlossen ist. Dazu sollte allerdings die Darstellung um genau diese Zeit-Toleranz verzögert werden, damit unklare Darstellungen vermieden werden. Die Berücksichtigung von Zeit-Toleranzen stellt somit eine weitere, wesentliche Verbesserung bei der Genauigkeit der Anomalie-Erkennung dar.

In einer ebenfalls vorteilhaften Ausführungsvariante werden in der Auswertungsphase bei der Anomalie-Erkennung unterschiedliche Zeitdauern der Prozessschritte bei den historischen und aktuellen Datensätzen berücksichtigt, woraufhin eine Analyse erfolgt und das Resultat der Analyse angezeigt wird. Dabei sollten kleinere zeitliche Abweichungen noch nicht zu einer Anomalie führen und als solche angezeigt werden, größere zeitliche Abweichungen, die letztendlich zu unterschiedlich langen Siegerneuronenverläufen führen, sollten als Anomalie angezeigt werden. Erfolgt ein Aufheizvorgang beispielsweise langsamer als erwartet, wird dies nach kurzer Zeit durch eine zu geringe Temperatur erkannt und es wird das entsprechende Symptom ausgegeben. Erreicht nun der Siegerneuronenverlauf das Ende des Aufheizschrittes (Zieltemperatur), obwohl der auszuwertende Schritt noch läuft, so können im weiteren Verlauf keine neuen Vergleichsneuronen mehr ausgewählt werden. Damit bleibt das letzte Siegerneuron so lange als Vergleich bestehen, bis der Schritt abgeschlossen ist. Gleichzeitig wird zusätzlich zum Symptom ausgegeben, dass eine zeitliche Verzögerung des Schrittes erkannt wurde. Genau wie ein zu langer Schritt stellt auch ein zu kurzer Schritt eine Anomalie dar. Läuft der Aufheizvorgang völlig normal ab, wird jedoch zu früh beendet, so wurde die "normale" Zieltemperatur ebenfalls nicht erreicht. Da es möglich ist, dass die Temperatur im Folgeschritt überhaupt nicht mit ausgewertet wird, würde die Abweichung ansonsten unerkannt bleiben. Wird also erkannt, dass der auszuwertende Schritt endet, obwohl der Siegerneuronenverlauf noch nicht zu Ende ist, erfolgt ebenfalls die Meldung einer Anomalie. Auch diese Ausführungsvariante führt vorteilhaft zu einer weiteren Verbesserung der Anomalie-Erkennung.

In einer weiteren vorteilhaften Weiterbildung der Erfindung werden eine konfigurierbare Auswahl der Diagnoseergebnisse umfassend Prozessvariablen, Sollwerte, Schrittidentifier, Anomalien und/oder Symptome gleichzeitig und/oder in Korrelation zueinander als zeitliche Verläufe oder wahlweise auch statistische Auswertungen dieser Diagnoseergebnisse auf einer Anzeige-Einheit dargestellt. Die Überwachung des verfahrenstechnischen Prozesses wird auf diese Weise für den Bediener der erfindungsgemäßen Software-Applikation erleichtert. Um mit den Diagnose-Ergebnissen effizient an der Problembehandlung der erkannten Anomalien arbeiten zu können, ist eine konfigurierbare Auswahl der Ergebnisse besonders vorteilhaft. Durch eine angemessene Darstellung können Anlagenbediener in kritischen Situationen mit dem Prozess interagieren, schnell handeln und einen Fehlerfall vermeiden. Dies kann sowohl Kosten und Zeit einsparen als auch schlimmere Gefahren abwenden.

Die zuvor ausgeführte Aufgabe wird ferner durch ein System zur Erkennung von Anomalien im Betrieb einer technischen Anlage gelöst, welches derart ausgebildet ist, dass mindestens eine Einheit zum Trainieren von SOMs, zum Speichern relevanter Daten und eine Einheit zum Auswerten aktueller Datensätze mit Hilfe der zuvor trainierten SOMs vorgesehen ist.

Bei dem Begriff System kann es sich sowohl um ein Hardwaresystem wie einem Computersystem bestehend aus Servern, Netzwerken und Speichereinheiten als auch um ein Softwaresystem wie einer Softwarearchitektur oder ein größeres Softwareprogramm handeln. Auch eine Mischung aus Hardware und Software ist denkbar, beispielsweise eine IT-Infrastruktur wie eine Cloud-Struktur mit ihren Services. Bestandteile einer solchen Infrastruktur sind üblicherweise Server, Speicher, Netzwerke, Datenbanken, Software-Anwendungen und -dienste, Datenverzeichnisse und Datenverwaltungen. Insbesondere virtuelle Server gehören ebenso zu einem System dieser Art.

Das erfindungsgemäße System kann auch Teil eines Computersystems sein, welches sich räumlich getrennt vom Standort der technischen Anlage, befindet. Das angeschlossene externe System, weist dann vorteilhaft die Auswerteeinheit auf, welche auf die Komponenten der technischen Anlage und/oder die damit verbundenen Datenspeicher zugreifen kann, und die ausgebildet ist die Diagnoseergebnisse zu visualisieren und zu einer Anzeigeeinheit zu übertragen. Auf diese Weise kann zum Beispiel eine Kopplung mit einer Cloud-Infrastruktur erfolgen, was weiterhin die Flexibilität der Gesamtlösung erhöht.

Auch lokale Implementierungen auf Computersystemen der technischen Anlage können vorteilhaft sein. So ist eine Implementierung z.B. auf einem Server des Prozessleitsystems insbesondere für sicherheitsrelevante Prozesse besonders geeignet.

Das erfindungsgemäße Verfahren wird somit bevorzugt in Software oder in einer Kombination Soft-/Hardware implementiert, so dass die Erfindung auch ein Computerprogramm mit durch einen Computer ausführbaren Programmcodeanweisungen zur Implementierung des Diagnoseverfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm kann, wie oben beschrieben, in einem Speicher eines Servers eines Prozessleitsystems geladen werden, so dass die Überwachung des Betriebs der technischen Anlage automatisch durchgeführt wird, oder das Computerprogramm kann bei einer Cloud-basierten Überwachung einer technischen Anlage in einem Speicher eines Remote-Service-Rechners vorgehalten oder in diesen ladbar sein.

Die zuvor ausgeführte Aufgabe wird entsprechend auch durch eine graphische Benutzeroberfläche (GUI, graphical user interface) gelöst, welche auf einer Anzeigeeinheit angezeigt wird, und welche dazu ausgebildet ist, die Diagnoseergebnisse des erfindungsgemäßen Systems in all seinen Varianten anzuzeigen.

Im Folgenden wird die Erfindung anhand der Figuren und anhand eines Ausführungsbeispiels näher beschrieben und erläutert.

Es zeigen
Figur 1 eine schematische Darstellung des erfindungsgemäßen Diagnosesystems
Figur 2 ein Beispiel einer Darstellung der Diagnoseergebnisse auf einer Anzeige-Einheit

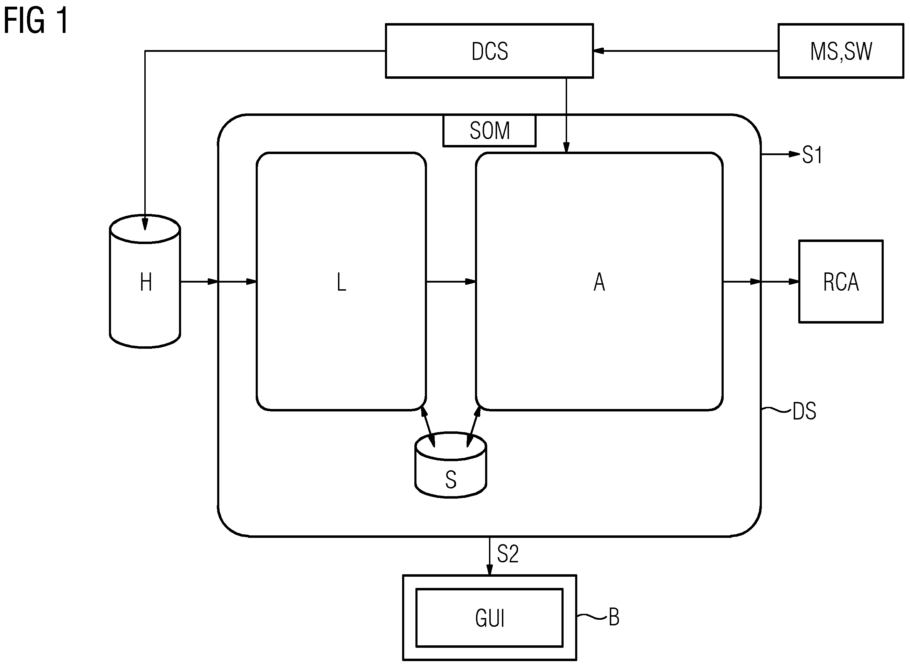

In Fig. 1 ist eine schematische Darstellung zur Erläuterung des erfindungsgemäßen Diagnosesystems DS gezeigt, bei dem ein Automatisierungssystem oder ein Prozessleitsystem DCS einen verfahrenstechnischen Prozess steuert, regelt und/oder überwacht. Zur Steuerung des Prozesses ist das Prozessleitsystem DCS mit einer Vielzahl von Feldgeräten (nicht dargestellt) verbunden. Messumformer dienen zur Erfassung von Prozessvariablen, wie beispielsweise Temperatur T, Druck P, Durchflussmenge F, Füllstand L, Dichte oder Gaskonzentration eines Mediums, die zumeist mittels Sensoren erfasst werden und somit Messwerten MS entsprechen. Durch Stellglieder kann der Prozessablauf in Abhängigkeit von erfassten Prozessvariablen beispielsweise den Vorgaben des Automatisierungsprogramms entsprechend, welche in Sollwerten SW ausgedrückt werden, beeinflusst werden. Als Beispiele für Stellglieder seien ein Regelventil, eine Heizung oder eine Pumpe genannt. Zur Überwachung des Betriebs der Anlage wird eine Vielzahl von Datensätzen, die für den Betrieb der Anlage kennzeichnend sind, in Abhängigkeit von der Zeit t erfasst und in diesem Ausführungsbeispiel in einem Datenspeicher H (häufig ein Archiv) abgespeichert. Zeitabhängig bedeutet hier entweder zu bestimmten einzelnen Zeitpunkten oder mit einer Abtastrate in regelmäßigen Abständen oder auch annähernd kontinuierlich. In den Datensätzen sind somit die Prozessvariablen mit den jeweiligen Zeitstempeln umfasst wie bspw. für die Temperatur: T= (T (t1), T(t2), T(t3) ... T(tN))^{T} wobei N eine beliebige natürliche Zahl darstellt und der Anzahl der Zeitstempel eines Prozessschritts entspricht. Bei einem Batch-Prozess kann es mehrere Prozessschritte geben, die jeweils eine bestimmte Phase des Prozesses charakterisieren, wie Aufheizen des Reaktors, Rühren innerhalb des Reaktors sowie Abkühlen des Reaktors. Dieser Prozess würde somit aus 3 Prozessschritten bestehen.

Mittels des Diagnosesystems DS werden die Datensätze, die Werte von Prozessvariablen mit entsprechenden Zeitstempeln enthalten, ausgewertet, um eine Diagnoseaussage zu bestimmen und einem Bediener Anomalien anzuzeigen, damit eventuell geeignete Maßnahmen zur Fehlerbehandlung getroffen werden können.

In der gezeigten Ausführungsvariante umfasst das Diagnosesystem DS im Wesentlichen eine Einheit L zum Trainieren der selbst-organisierenden Karten, eine Einheit S zum Speichern der zur Durchführung des Verfahrens notwendigen Größen und eine Einheit A zum Auswerten der aktuellen Datensätze eines Prozessschritts oder Batch-Prozesses mit Hilfe der in der Lernphase trainierten selbst-organisierenden Karte. Je nach Ausführung können diese Einheiten auch als eine Einheit zusammengefasst sein oder in anderen Varianten ausgestaltet sein, je nach Implementierung.

Ausgangssignale des Diagnosesystems können weiteren Systemen wie beispielsweise einem weiteren Prozessleitsystem oder Teilen davon zugeführt werden oder zur Weiterverarbeitung verwendet werden (Signal S1). Ferner können Ausgangssignale des Diagnosesystems zur Visualisierung an eine Ausgabeeinheit B weitergegeben werden (Signal S2), sofern das Diagnosesystem eine solche nicht selbst umfasst. Die Anzeigeeinheit B kann direkt an das Diagnosesystem anschließbar sein oder je nach Implementierung beispielsweise über einen Datenbus mit dem Diagnosesystem verbunden sein. Bei der Anzeigeeinheit B kann es sich auch um ein Bedien- und Beobachtungsgerät eines Prozessleitsystems handeln. Auf der graphischen Benutzeroberfläche des Bedien- und Beobachtungsgerätes können durch einen Bediener, falls gewünscht, Änderungen an der selbstorganisierenden Karte, an den Schwellwerten oder sonstigen Parametern vorgenommen werden.

Die Einheit L zum Trainieren der selbst-organisierenden Karten (SOM) verwendet dazu historische Datensätze mit zeitabhängigen Messwerten von Prozessvariablen (als n-Tupel) und ist dazu mit dem Datenspeicher H verbunden. Die Einheit L kann vorteilhaft offline betrieben werden, da der Einlernvorgang rechenintensiv ist. Denn zum Einlernen der selbstorganisierenden Karten sollten zahlreiche Gut-Verläufe aufgenommen werden. Neben dem Einlernen der Karten werden in der Einlernphase Schwellwerte, Siegerneuronenverläufe und weitere Größen bestimmt und in dem Speicher S zur weiteren Verwendung abgelegt.

Die Einheit A zum Auswerten der aktuellen Datensätze eines Prozessschritts mithilfe der in der Lernphase trainierten selbst-organisierenden Karten kann beispielsweise online betrieben werden, um den Bediener einer Anlage bei der Überwachung des Anlagenzustands zu unterstützen. Dabei besteht die Möglichkeit, die aktuellen Prozesswerte aus dem Prozessleitsystem DCS durch das erfindungsgemäße Verfahren auszuwerten.

Die Auswerteeinheit A oder das Diagnosesystem DS kann optional auch mit einer Einheit RCA zur weitergehenden Ursachenermittlung verbunden werden, an welche beispielsweise die Symptomvektoren und/oder die Prozessvariablen weitergegeben werden, die an dem oder den aktuellen Symptomen beteiligt sind.

Das Diagnosesystem DS zur Durchführung des erfindungsgemäßen Verfahrens kann beispielsweise auch in einer Client-Server-Architektur realisiert werden. Hierbei dient der Server der Bereitstellung von gewissen Diensten wie dem erfindungsgemäßen Diagnosesystem, zur Bearbeitung einer genau definierten Aufgabe (hier die Anomalie-Erkennung). Der Client (hier die Anzeige-Einheit B) ist in der Lage, die entsprechenden Dienste vom Server anzufordern und zu nutzen. Typische Server sind Webserver zum Bereitstellen von Web-Seiten-Inhalten, Datenbankserver zum Speichern von Daten oder Anwendungsserver zum Bereitstellen von Programmen. Die Interaktion zwischen dem Server und Client erfolgt über geeignete Kommunikationsprotokolle wie http oder jdbc.

In einer weiteren Ausführungsvariante kann das Diagnosesystem DS oder Teile davon grundsätzlich auch in einer Automatisierungsumgebung als Software-Funktionsbaustein ausgebildet sein. Dies gilt insbesondere für die Auswerteeinheit A, da sie erheblich weniger Ressourcen (Rechenleistung und Speicherbedarf) als die Lerneinheit mit ihren eher umfangreichen Lernalgorithmen benötigt und daher auch für eine Implementierung auf der Feld- und Automatisierungsebene geeignet ist.

Da es sich bei den Verfahren zur Anlagenüberwachung um keine sicherheitsrelevanten bzw. zeitkritischen Funktionen eines Leitsystems handelt, besteht alternativ auch die Möglichkeit, die Daten des Prozesses im Leitsystem zu sammeln und auf einem Server zu "archivieren", welcher die eigentliche Analyse vornimmt. Eine weitere Möglichkeit ist der Einsatz einer Cloud Umgebung (z.B. der MindSphere) oder als On-Premise Lösung die direkte Speicherung der Daten auf einem speziellen Datenbankserver auf der Leitsystemebene.

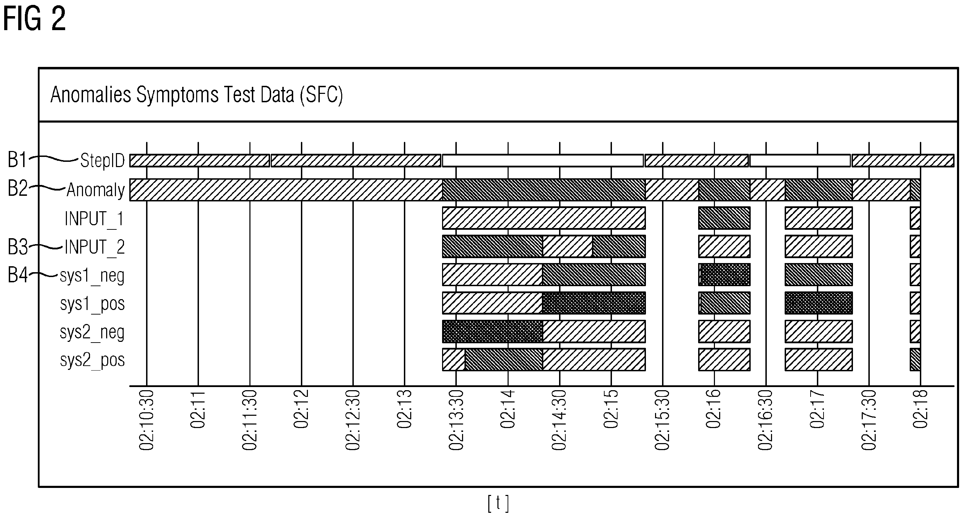

Figur 2 zeigt eine übersichtliche visuelle Darstellung der Diagnoseergebnisse des Diagnosesystems DS in Form einer Balkendarstellung in Abhängigkeit von der Zeit t. Die Balken stehen in Zusammenhang mit bestimmten Prozessinformationen und werden häufig in bestimmten Farben gezeigt, was den Bediener dabei unterstützen soll, kritische Situationen schneller zu erkennen. Der oberste Balken StepID (Bezugszeichen B1) kennzeichnet den jeweiligen Prozessschritt und wird auch als Schrittidentifier bezeichnet. Der darunter angeordnete Balken B2 kennzeichnet das Vorliegen einer Anomalie. Er kann beispielsweise grün (hier leicht schraffiert) für den Normalbetrieb angezeigt werden und rot (hier stark schraffiert) für das Vorliegen einer Abweichung vom Normalbetrieb. Wie bereits erwähnt können weitere Farben oder Schattierungen dafür verwendet werden, Zwischenzustände anzuzeigen oder weitere Informationen zu übermitteln, wie z.B. zeitlich zu lange oder zu kurze Prozessschritte. Die Balken B3 und B4 kennzeichnen die Symptome im Zusammenhang mit den obendrüber dargestellten Anomalien für die einzelnen Signale INPUT_1, INPUT_2 und sys1_neg bis sys2_pos. In diesem Beispiel werden Balken nur für die Zeiträume dargestellt, in denen eine Anomalie vorliegt. In dieser Darstellung können vorteilhaft die Vorzeichen der Symptome durch Farben dargestellt werden. Ein grüner Balken (hier leicht schraffiert) im Zusammenhang mit einem Signal kann beispielsweise bedeuten, dass kein Symptom vorliegt, ein roter Balken (hier stark schraffiert) könnte beispielsweise eine positive Abweichung des Signals und ein blauer Balken (hier dunkel intensiv schraffiert) könnte eine negative Abweichung des Signals anzeigen.

In Fig. 2 ist im Zeitbereich 02:13:30 bis ca. 02:15:30 durch die starke Schraffur das Vorliegen einer Anomalie angezeigt. Das Signal INPUT_1 zeigt in diesem Zeitbereich einen Normalzustand an (hier leicht schraffiert), das Signal INPUT_2 hingegen zeigt in diesem Zeitbereich zwei Mal eine Überschreitung (stark schraffiert), die Signale sys1_pos und sys2_neg hingegen zeigen in diesem Zeitbereich jeweils teilweise eine negative Abweichung, also eine Unterschreitung des normalen Wertes an.

Alternativ zu der in Fig. 2 gezeigten Balkendarstellung lassen sich die Symptome in Abhängigkeit von der Zeit auch als Trend-Fenster mit weiteren Details visualisieren.

## Patentansprüche

1. Verfahren zur Erkennung von Anomalien im Betrieb einer technischen Anlage, in welcher ein verfahrenstechnischer Prozess mit mindestens einem Prozessschritt abläuft, wobei den Betrieb der Anlage kennzeichnende Datensätze mit Werten von Prozessvariablen (L, T, F, ...) zeitabhängig erfasst und in einem Datenspeicher mit Zeitstempeln abgelegt werden, und zur Ermittlung einer Diagnoseaussage mindestens eine selbstorganisierende Karte (SOM) verwendet wird, umfassend:
**in der Lernphase** unter Verwendung historischer Datensätze, die einen fehlerfreien Betrieb der Anlage kennzeichnen:
- Trainieren einer SOM pro Prozessschritt oder Batch
- pro SOM Ermitteln und Speichern von Symptom-Schwellwerten und deren Toleranzen für jedes Neuron
- pro Prozessschritt oder Batch für alle Zeitstempel Ermitteln und Speichern aller zulässigen, zeitlichen Verläufe der Siegerneuronen unter Beachtung der Neuronen-Ähnlichkeit, wobei es sich um alle Neuronen handelt, die innerhalb der Symptom-Toleranzen liegen,
**in der Auswertungsphase** unter Verwendung aktueller Datensätze eines Prozessschritts oder Batch-Prozesses:
- für den auszuwertenden Datensatz pro Zeitstempel Ermitteln des Siegerneurons innerhalb mindestens eines der in der Lernphase ermittelten zulässigen Siegerneuronenverläufe unter Beachtung der Neuronen-Ähnlichkeit,
- Bestimmung des wahrscheinlichsten Siegerneuronenverlaufs durch Ermittlung der Symptome aller vergangenen Zeitstempel dieses Prozessschritts oder dieses Batch-Prozesses,
- wird für einen Zeitstempel keine Zugehörigkeit des Siegerneurons zu einem in der Lernphase ermittelten zulässigen Siegerneuronenverlauf ermittelt, Bestimmung des Symptomvektors für diesen Zeitstempel unter Beachtung der Symptom-Schwellwerte unter Nutzung des wahrscheinlichsten Siegerneuronenverlaufs und Ausgabe mindestens der Prozessvariablen, die eine Anomalie aufweisen.

2. Verfahren nach Anspruch 1,
wobei anstelle der Symptom-Schwellwerte oder zusätzlich zu den Symptom-Schwellwerten Quantisierungsfehler mittels der Trainingsdaten ermittelt werden und bei der Auswertung für die Ermittlung des wahrscheinlichsten Siegerneuronenverlaufs verwendet werden.

3. Verfahren nach Anspruch 1 oder 2,
wobei die Schwellwerte und/oder Quantisierungsfehler samt Toleranzen mittels der Trainingsdaten automatisch ermittelt werden.

4. Verfahren nach Anspruch 1,
wobei in der Lernphase die Größe der SOM optimiert wird.

5. Verfahren nach einem der Ansprüche 1 bis 4,
wobei in der Lernphase historische Datensätze bestimmt werden, welche das Sollverhalten des Betriebs der technischen Anlage als Arbeitspunkt abbilden, indem mindestens eine Prozessvariable des Datensatzes als Sollwert definiert wird, wobei für jeden Wert dieser Variablen oder im Fall von mehreren Variablen für jede Wertekombination eine eigene SOM eintrainiert wird, und aktuelle Datensätze mittels dieser SOM pro Arbeitspunkt ausgewertet werden

6. Verfahren nach Anspruch 5,
wobei bei einer Vielzahl von Sollwerten eine Clusterung der Sollwerte erfolgt und pro Cluster eine SOM eingelernt wird.

7. Verfahren nach Anspruch 5 oder 6,
wobei analysiert wird, wie stark sich die SOMs verschiedener Cluster unterscheiden, indem die Daten aus einem ersten Cluster mit der SOM eines zweiten Clusters ausgewertet werden und die Abweichungen zwischen Daten und SOMs bestimmt werden und bei zu geringen Abweichungen die entsprechenden Cluster zusammengefasst werden.

8. Verfahren nach einem der vorhergehenden Ansprüche,
wobei nach der Lernphase erhaltene Gut-Daten lediglich zur weiteren Verbesserung der Schwellwerte und der Bestimmung der Siegerneuronenverläufe genutzt werden.

9. Verfahren nach einem der vorhergehenden Ansprüche,
wobei einstellbar ist, welche Werte pro Prozessschritt oder Batch ausgewertet werden und/oder welche Zeiträume/Prozessschritte oder Batch-Prozesse, bestehend aus mehreren Prozessschritten, als "Gut" klassifiziert werden.

10. Verfahren nach einem der vorhergehenden Ansprüche,
wobei in der Auswertungsphase bei der Anomalie-Erkennung Zeit-Toleranzen hinsichtlich der Zeitstempel berücksichtigt werden und entweder fest hinterlegte Toleranzen berücksichtigt werden oder diese eingestellt werden.

11. Verfahren nach einem der vorhergehenden Ansprüche,
wobei in der Auswertungsphase bei der Anomalie-Erkennung unterschiedliche Zeitdauern der Prozessschritte bei den historischen und aktuellen Datensätzen berücksichtigt werden, eine Analyse erfolgt und das Resultat der Analyse angezeigt wird.

12. Verfahren nach einem der vorhergehenden Ansprüche,
wobei eine konfigurierbare Auswahl der Diagnoseergebnisse umfassend Prozessvariablen, Sollwerte, Schrittidentifier, Anomalien und/oder Symptome gleichzeitig und/oder in Korrelation zueinander als zeitliche Verläufe oder wahlweise auch statistische Auswertungen dieser Diagnoseergebnisse auf einer Anzeige-Einheit dargestellt werden.

13. System (DS) zur Erkennung von Anomalien im Betrieb einer technischen Anlage, in welcher ein verfahrenstechnischer Prozess mit mindestens einem Prozessschritt abläuft, umfassend mindestens:
- eine Einheit (L) zum Trainieren von selbst-organisierenden Karten (SOM) unter Verwendung von historischen Datensätzen mit Werten von zeitabhängig ermittelten Prozessvariablen (L, T, F, ...), welche einen fehlerfreien Betrieb der Anlage kennzeichnen, welche ausgebildet ist, die Schritte der Ansprüche 1 bis 12 durchzuführen, welche die Lernphase des Verfahrens betreffen,
- eine Einheit (S) zum Speichern der SOMs, von Schwellwerten, Toleranzen und weiterer Daten, die zur Durchführung des Verfahrens nach einem der Ansprüche 1 bis 12 notwendig sind,
- eine Einheit (A) zum Auswerten der aktuellen Datensätze eines Prozessschritts oder Batch-Prozesses mit Hilfe der in der Lernphase trainierten selbst-organisierenden Karten (SOM), wobei die Auswerteeinheit derart ausgebildet ist, die Schritte der Ansprüche 1 bis 12 durchzuführen, welche die Auswertungsphase des Verfahrens betreffen.

14. System nach Anspruch 13,
welches zusätzlich eine Einheit (B) zum Anzeigen und Ausgeben der mittels der Auswerteeinheit ermittelten Diagnoseergebnisse umfasst oder zumindest eine Schnittstelle (S2) zur Verbindung mit einer Einheit (B) zum Anzeigen und Ausgeben der mittels der Auswerteeinheit ermittelten Diagnoseergebnisse umfasst.

15. Computerprogramm, insbesondere Software-Applikation, mit durch einen Computer ausführbaren Programmcodeanweisungen zur Implementierung des Verfahrens nach einem der Ansprüche 1 bis 12, wenn das Computerprogramm auf einem Computer ausgeführt wird.

16. Computerprogrammprodukt, insbesondere Datenträger oder Speichermedium, mit einem durch einen Computer ausführbaren Computerprogramm gemäß Anspruch 15.

17. Graphische Benutzeroberfläche (GUI), welche auf einer Anzeigeeinheit angezeigt wird, und welche dazu ausgebildet ist, die Diagnoseergebnisse des Systems nach Anspruch 13 anzuzeigen.
